# EUROPÄISCHE PATENTSCHRIFT

(11) **EP 2 665 666 B1**
(45) Veröffentlichungstag und Bekanntmachung des Hinweises auf die Patenterteilung: **31.12.2014**
(21) Anmeldenummer: 13705903.6
(22) Anmeldetag: 18.01.2013
(51) Int. Cl.: B65G 61/00, B65G 67/08

(54) **VORRICHTUNG UND VERFAHREN ZUM ENTLADEN VON STÜCKGUT AUS EINEM LADERAUM**
APPARATUS AND METHOD FOR UNLOADING PIECE GOODS FROM A CARGO SPACE
DISPOSITIF ET PROCEDE POUR DECHARGER DES MARCHANDISES D'UN ESPACE DE CHARGEMENT

(30) Priorität: 09.02.2012 DE 102012003439
(43) Veröffentlichungstag der Anmeldung: 27.11.2013
(73) Patentinhaber: BEUMER GmbH & Co. KG, 59267 Beckum (DE)
(72) Erfinder: HEITPLATZ, Heino, 48317 Drensteinfurt (DE); PÖLLING, Ludger, 59329 Wadersloh (DE); WIESMANN, Thomas, 59269 Beckum (DE); SCHÄFER, Philipp, 33142 Büren (DE)
(74) Vertreter: Philipp, Matthias
(86) Internationale Anmeldenummer: PCT/DE2013/000035
(87) Internationale Veröffentlichungsnummer: WO 2013/117177

(56) Entgegenhaltungen:
- DE-A1- 19 719 748
- DE-A1-102010 033 115
- GB-B- 2 410 482

## Beschreibung

Die Erfindung betrifft eine Vorrichtung zum Entladen von auf einem Boden eines Laderaums gestapeltem, geschüttetem oder lose gehäuftem Stückgut wie Pakete, Kartons, Kisten und ähnliche Packstücke, mit einem Aufnahmeförderer, der ein frei vorstehendes Aufnahmeende und ein hinteres Abgabeende aufweist, einen Abförderer und einen dazwischen angeordneten Übergabeförderer, der ein vorderes, an das Abgabeende des Aufnahmeförderers anschließendes Übernahmeende und ein hinteres, an ein Kopfende des Abförderers anschließendes Übergabeende aufweist, wobei der Übergabeförderer um eine quer zu seiner Förderrichtung an dem Übergabeende und benachbart zu dem Kopfende des Abförderers angeordnete erste Schwenkachse höhenverschwenkbar gehalten ist, und der Aufnahmeförderer um eine quer zu seiner Förderrichtung an dem Abgabeende und benachbart zu dem Übernahmeende des Übergabeförderers angeordnete zweite Schwenkachse höhenverschwenkbar gehalten ist.

Die Erfindung betrifft ferner ein Verfahren zum Entladen von auf einem Boden eines Laderaums gestapeltem, geschüttetem oder lose gehäuftem Stückgut unter Verwendung einer derartigen Vorrichtung.

Eine Vorrichtung und ein Verfahren der genannten Gattung werden insbesondere zum schüttgutartigen Entladen von Stückgut aus Laderäumen von Fahrzeugen, auch in Form von Wechselaufbaubrücken oder Wechselaufbaubehältern, eingesetzt, wobei es sich bei letzteren um austauschbare Ladungsträger handelt, die von einem Trägerfahrzeug (Lkw) befördert und von diesem getrennt werden können.

Das Ziel der Erfindung ist somit nicht das vereinzelte Entladen von Gegenständen, wobei jeder Gegenstand einzeln gegriffen und gehandhabt wird, sondern bevorzugt ein schüttgutartiges Entladen, bei dem ein hoher Durchsatz von beispielsweise mindestens 3000 Stück/Stunde angestrebt wird.

Aus der DE 10 2010 015 299 A1 ist ein System zum Handhaben von Stückgütern zum vorzugsweise automatischen Be- und Entladen eines Laderaums, in dem die Stückgüter übereinander gestapelt sind, bekannt, bei dem mehrere in Reihe hintereinander angeordnete Förderbänder vorgesehen sind, die zum Teil schwenkbar und höhenverstellbar gehalten sind und eine Überführung von Stückgütern unmittelbar aus einer jeweiligen Höhenlage eines Stückgutelements auf einen Aufnahmeförderer ermöglichen, von dem aus die Stückgüter über einen Übergabeförderer zu einem Abförderer gelangen. Der Aufnahmeförderer ist in unterschiedlichen Höhen stets im Wesentlichen horizontal ausgerichtet, um Stückgüter zu übernehmen.

Sofern es sich um Stückgüter mit im Wesentlichen einheitlicher Größe handelt, die geordnet gestapelt sind, kann mit einem derartigen System vorteilhaft gearbeitet werden. Probleme treten allerdings dann auf, wenn einzelne Stückgüter deutlich ungleichmäßige Abmessungen aufweisen und/oder unregelmäßig gestapelt sind, da dann häufig der Fall eintritt, dass einzelne Stückgüter neben dem Aufnahmeförderer auf den Boden des Laderaums oder auf andere Stückgüter herabfallen. Abgesehen von einer Beschädigungsgefahr der Stückgüter durch Herabfallen besteht die Gefahr, dass herabgefallenes Stückgut beim Herunterfahren des Aufnahmeförderers eingeklemmt wird. Daneben besteht die Schwierigkeit, unkontrolliert herabgefallenes und ungeordnet auf dem Boden liegendes Stückgut in geeigneter Weise mit dem Aufnahmeförderer aufzunehmen.

Die Erfindung hat sich die Aufgabe gestellt, eine verbesserte Vorrichtung und ein verbessertes Verfahren zum Entladen von auf einem Boden eines Laderaums gestapeltem Stückgut vorzuschlagen, bei dem die vorgenannten Probleme zumindest teilweise gelöst sind. Bei einer gattungsgemäßen Vorrichtung wird diese Aufgabe durch die Maßnahme gelöst, dass der Aufnahmeförderer und der Übergabeförderer durch Verschwenken um die erste und/oder die zweite Schwenkachse in mindestens eine obere Entladestellung, in der sich eine Förderoberfläche des Übergabeförderers im Wesentlichen waagerecht, d.h. unter einem Winkel von höchstens 10°, 20°, 30° oder 40° zur Horizontalen, vor der ersten Schwenkachse, eine Förderoberfläche des Aufnahmeförderers im Wesentlichen senkrecht, d.h. unter einem Winkel von höchstens 10°, 20°, 30° oder 40° zur Vertikalen, unter der zweiten Schwenkachse und das Aufnahmeende des Aufnahmeförderers auf oder unmittelbar über dem Boden des Laderaums befinden, oder in mindestens eine untere Entladestellung, in der sich die Förderoberfläche des Aufnahmeförderers und des Übergabeförderers im Wesentlichen waagerecht, d.h. unter einem Winkel von höchstens 10°, 20°, 30° oder 40° zur Horizontalen, vor der zweiten Schwenkachse und das Aufnahmeende des Aufnahmeförderers auf oder unmittelbar über dem Boden des Laderaums befinden, bringbar sind.

In einer bevorzugten oder ersten oberen Entladestellung befindet sich die Förderoberfläche des Aufnahmeförderers um höchstens 10° zur Vertikalen geneigt, und insbesondere in einer vertikalen Stellung unter dem Übernahmeende des Übergabeförderers, und die Förderoberfläche des Übergabeförderers unter 20° bis 40°, bevorzugt 25° bis 35° zur Horizontalen, in Förderrichtung abfallend. In einer bevorzugten zweiten oberen oder mittleren Entladestellung nimmt der Aufnahmeförderer eine Stellung wie in der bevorzugten oberen Entladestellung ein, während die Förderoberfläche des Übergabeförderers in einem Bereich zwischen 10° zur Horizontalen, in Förderrichtung ansteigend, und bevorzugt zwischen 5° und 15°, in Förderrichtung abfallend, angeordnet ist.

In einer bevorzugten unteren Entladestellung sind Übergabe- und Aufnahmeförderer unter gleichen Winkeln in Förderrichtung ansteigend geneigt, insbesondere unter 10° bis 30°, und schließen kontinuierlich aneinander an. Damit ist eine kontinuierliche erste Förderoberfläche gebildet, die im Wesentlichen eben ist.

In einer oberen oder der bevorzugten oberen Entladestellung besteht der Vorteil, dass der Aufnahmeförderer eine Abgrenzung des Übernahmeendes des Übergabeförderers zum Boden bildet, so dass möglicherweise unkontrolliert herabfallendes Stückgut keinesfalls in einen Bereich unter dem Übergabeförderer, d.h. zwischen den Boden des Laderaums und den Übergabeförderer, gelangen kann, während in der unteren Entladestellung jegliches auf dem Boden geordnet oder ungeordnet liegendes Stückgut relativ problemlos aufnehmbar ist.

Zweckmäßigerweise sind neben Förderantrieben der Förderer Antriebe für die Verschwenkbewegung zumindest des Übergabeförderers, gegebenenfalls auch des Aufnahmeförderers vorhanden, beispielsweise jeweils ein hydraulischer Antrieb, ein Servomotor oder ein Schrittmotor mit Getriebe für den Übergabe- und gegebenenfalls auch den Aufnahmeförderer. Der Aufnahmeförderer kann frei schwenkbar an dem Übergabeförderer aufgehängt sein, so dass er in der unteren Entladestellung allein dadurch, dass der Übergabeförderer in Richtung auf eine obere Entladestellung hochgeschwenkt wird, eine steilere Stellung oder seine vertikale Stellung einnimmt. Umgekehrt gelangt in diesem Fall der Aufnahmeförderer durch Abwärtsschwenken des Übernahmeförderers, da das Aufnahmeende auf dem Boden bzw. auf einer Rolle mit geringem Abstand vom Boden aufliegt, in eine zunehmend flachere Stellung, etwa ausgehend von einer vertikalen Stellung.

Der Abförderer kann in einer vorgegebenen Höhe oberhalb des Bodens angeordnet sein, insbesondere in horizontaler Ausrichtung, wobei die vorgegebene Höhe einen Wert von etwa einer Länge bis einer halben Länge des Aufnahmeförderers haben kann. Der Übergabeförderer und der Abförderer können in einer oberen Entladestellung horizontal oder in Förderrichtung abfallend eingerichtet sein und schließen kontinuierlich aneinander an. Damit ist eine kontinuierliche zweite Förderoberfläche gebildet. Insgesamt bilden die erste und zweite Förderoberfläche, da Aufnahme-, Übergabe- und Abförderer jeweils kontinuierlich aneinander anschließen, eine kontinuierliche Förderoberfläche.

Das freie, von dem Abförderer abgekehrte Aufnahmeende des Aufnahmeförderers kann eine Breite aufweisen, die das 1,5 bis 3fache einer Breite des Abförderers beträgt, und insbesondere eine Breite von 2 bis 3 m, um Transportbehälter wie Container entladen zu können. Bevorzugt hat der Aufnahmeförderer eine konstante Breite über seine Länge, während der Übergabeförderer eine Breite aufweist, die sich zwischen seinem Übernahmeund Übergabeende allmählich ohne sprunghafte Übergänge bis auf die Breite des Abförderers verringert.

Bevorzugt ist vorgesehen, dass der Aufnahmeförderer teleskopierbar oder passiv längenanpassbar ist. Bei einer teleskopierbaren Ausführung kann der Aufnahmeförderer aktiv stufenlos in beiden Richtungen in seiner Länge verändert werden. Bei einer passiv längenanpassbaren Ausführung ist in einem unbelasteten Zustand eine Ausgangslänge vorhanden, wobei sich die Länge des Aufnahmeförderers unter der Wirkung einer in seiner Förderrichtung auf das Aufnahmeende wirkenden Kraft gegen eine von einer Rückstellfeder ausgeübte Rückstellkraft verkürzen kann und bei Wegfall der Kraft wieder auf die Ausgangslänge einstellt. Die veränderbare Länge des Aufnahmeförderers ermöglicht eine gewisse Flexibilität hinsichtlich der Höhe über dem Boden, in der der Abförderer und der Übergabeförderer bei horizontaler Ausrichtung angeordnet sein können. Die kürzestmögliche Länge des Aufnahmeförderers kann beispielsweise höchstens 90%, 80%, 70%, 60% oder 50% einer Ausgangslänge im unverkürzten Zustand betragen. Der Aufnahmeförderer kann mit einer Sicherheitsabschaltung versehen sein, die den Förderantrieb des Aufnahmeförderers abschaltet, wenn eine vorgegebene Länge unterschritten wird, beispielsweise die kürzestmögliche Länge erreicht wird, und/oder wenn eine vorbestimmte, auf das Aufnahmeende in Förderrichtung wirkende Kraft überschritten wird. Auch kann die Sicherheitsabschaltung so eingerichtet sein, dass sie eine Abwärtsschwenkbewegung des Übergabeförderers abschaltet, sobald eine vorgegebene Länge des Aufnahmeförderers unterschritten und/oder eine vorbestimmte, auf das Aufnahmeende in Förderrichtung wirkende Kraft überschritten wird.

In der unteren Entladestellung kann der gegen eine Federrückstellkraft längenanpassbare Aufnahmeförderer schonend gegen auf dem Boden liegendes Stückgut angedrückt werden, ohne dieses zu beschädigen. Bei einer Andruckkraft, die einen vorgegebenen Wert überschreitet, gibt der Aufnahmeförderer unter Längenverkürzung nach. Damit wird auch ein Wegausgleich für die Fahreinheit erreicht.

Zweckmäßigerweise sieht die Erfindung vor, dass der Abförderer teleskopierbar ist, wobei sich bei einer Verlängerung des Abförderers sein Kopfende und die erste Schwenkachse entgegen seiner Förderrichtung verlagern, und Übergabe- und Aufnahmeförderer beispielsweise in einen Laderaum hinein verfahren werden.

Der Abförderer kann mittels einer auf einem Untergrund, beispielsweise dem Boden des Laderaums, verfahrbaren Fahreinheit in oder entgegen seiner Förderrichtung teleskopierbar sein. Obwohl grundsätzlich der Abförderer, der Übergabeförderer und der Aufnahmeförderer separat beweg- oder verfahrbare Einheiten sein können, ist es zweckmäßig, wenn der Abförderer und der Übergabeförderer auf einer gemeinsamen Fahreinheit angeordnet sind, die als Ganzes verfahrbar ist. Bevorzugt ist die Fahreinheit vorwärts, rückwärts oder schräg vorwärts/rückwärts verfahrbar, ohne ihre Ausrichtung zu verändern, d.h. ohne Eigendrehung um eine vertikale Achse.

Die Fahreinheit kann antreibbare und lenkbare Rollen besitzen, mit denen eine gewünschte Fahrbewegung ausgeführt werden kann. Zweckmäßig sind drei an den Ecken eines gleichschenkligen oder ungleichschenkligen Dreiecks angeordnete lenkbare Rollen vorgesehen, deren Lenkstellung bzw. Lenkrichtung übereinstimmt und über einen motorisch angetriebenen Riemen- oder Kettenantrieb synchronisiert ist.

Die Fahreinheit hat bevorzugt seitliche Abstandssensoren, etwa in Form von Ultraschall- oder optischen Sensoren um einen seitlichen Abstand, auf jeder Seite, von einer Wand o.ä. zu erfassen. Je Seite können zwei oder mehr mit gegenseitigem horizontalem Abstand angeordnete Abstandssensoren vorgesehen sein. Daneben können zwei in Längsrichtung nach vorn gerichtete Laserpointer als Einfahr- und Steuerungshilfe vorgesehen sein.

An einem vorderen Ende der Fahreinheit kann in Bodennähe eine quer angeordnete Lichtschranke vorgesehen sein, mit der Gegenstände wie etwa Stückgut erfasst werden können, die die Bedienungsperson nicht sehen kann und beim Vorfahren der Fahreinheit beschädigen könnte. Am vorderen Ende und bevorzugt auch an beiden Seiten der Fahreinheit ist eine Abweiserbürste oder -leiste angeordnet, die bis oder fast bis zum Boden reicht, um zu verhindern, dass eventuell übersehene Stückgutteile überfahren werden.

Die Fahreinheit kann mittels zwei paralleler Koppelstangen mit dem Abförderer verbunden sein, um eine gewisse Toleranz der beiderseitigen Positionen zuzulassen.

Es kann vorgesehen sein, dass der Übergabeförderer an dem Übernahmeende breiter ist als an dem Übergabeende und mit mindestens einem, insbesondere rechteckigen, dreieck- oder trapezförmigen, zum Übergabeende hin verjüngt zulaufenden seitlichen Förderelement versehen ist. Alternativ kann der Übergabeförderer eine dreieck- oder trapezförmig ausgebildete Rollenbahn aufweisen, deren Rollen entlang einer Längsmittellinie geteilt und leicht V-förmig konvergierend angestellt sind, um eine Förderkomponente zur Mitte zu erzielen. Zweckmäßigerweise ist der Aufnahmeförderer ebenso breit wie der Übergabeförderer an seinem Übernahmeende, und bevorzugt ist der Übergabeförderer an seinem Übergabeende ebenso breit wie der Abförderer an seinem Kopfende.

Der Aufnahmeförderer kann mehrere parallel nebeneinander angeordnete Aufnahmeförderelemente aufweisen, die unabhängig voneinander, auch mit unterschiedlichen Geschwindigkeiten, antreibbar, reversierbar und teleskopierbar oder passiv längenanpassbar sein können. Der Übergabeförderer kann mehrere parallel nebeneinander angeordnete Übergabeförderelemente aufweisen, die unabhängig voneinander antreibbar und reversierbar sein können, auch mit unterschiedlichen Geschwindigkeiten. Aufnahme- und/oder Übergabeförderer können stoßdämpfend ausgebildet sein, um Stöße herabfallender Stückgüter zu dämpfen und diese zu schonen, beispielsweise mittels stoßdämpfender Förderbänder, etwa bestehend aus oder beschichtet mit elastischem Material, oder mittels federnd aufgehängter Rollen im Falle eines Rollenförderers.

Es kann vorgesehen sein, dass ein- oder beiderseits benachbart zu dem Abförderer und/oder ein- oder beiderseits benachbart zu dem Übergabeförderer und/oder ein- oder beiderseits benachbart zu dem Aufnahmeförderer vertikale oder schräg auswärts geneigte, fest angebrachte und/oder bewegliche Seitenwangen angeordnet sind, um ein Herabfallen von Stückgut von dem Übergabeförderer oder dem Abförderer zu vermeiden.

Links und/oder rechts, in Förderrichtung gesehen, benachbart zu dem Übergabeförderer und/oder dem Abförderer, und insbesondere außerhalb und benachbart zu einer Seitenwange, kann eine Arbeitsplattform für eine Bedienungsperson angeordnet sein. Die Bedienungsperson kann die Bewegungen und Fördergeschwindigkeiten von Fahreinheit, Abförderer, Übergabeförderer und Aufnahmeförderer manuell ansteuern oder eine fertig eingerichtete Steuerung bedienen, mit der die Antriebe für die Förderer und die Verschwenkbewegungen um die erste und zweite Schwenkachse und die Fahreinheit steuerbar sind und die Vorrichtung in eine gewünschte Entladestellung oder Aufnahmestellung gebracht und bedarfsweise verfahren werden kann. Insbesondere besteht die Möglichkeit, mehrere unterschiedliche obere und/oder untere Entladestellungen in die Steuerung einzuprogrammieren bzw. einzuspeichern, wobei dann je nach Bedarf eine geeignete Entladestellung ausgewählt werden kann, in der der Aufnahmeförderer und der Übergabeförderer jeweils eine vorgegebene Neigung einnehmen und gegebenenfalls durch Verfahren der Vorrichtung in eine gewünschte Position gebracht sind, beispielsweise mehr oder weniger weit in den Laderaum ein- oder aus diesem ausgefahren sind.

Im Falle einer rechtshändig arbeitenden Bedienungsperson ist eine Anordnung der Arbeitsplattform links von dem Abförderer, in Richtung Aufnahmeförderer gesehen, zweckmäßig, da sich dann ein Manipulationsgerät oder Hilfswerkzeug wie Stange, Lanze, Greifer oder Haken, das die Bedienungsperson mit der rechten Hand hält, näher an der Mitte der Förderer befindet als bei Anordnung rechts vom Abförderer.

Die Erfindung bezieht sich weiterhin auf ein Verfahren zum Entladen von auf einem Boden eines Laderaums gestapeltem Stückgut, unter Verwendung einer Vorrichtung nach der Erfindung, wobei in einem ersten Schritt die Vorrichtung in eine obere Entladestellung gebracht und Stückgut, das sich oberhalb einer vorgegebenen Entladehöhe oder oberhalb des Übergabeförderers befindet, auf den Übergabeförderer verbracht wird, und in einem zweiten Schritt die Vorrichtung in eine untere Entladestellung gebracht wird und Stückgut, das sich unterhalb der vorgegebenen Entladehöhe oder auf dem Boden des Laderaums befindet, auf den Aufnahmeförderer verbracht wird. Das Verbringen von oberhalb der vorgegebenen Entladehöhe befindlichem Stückgut auf den Übergabeförderer erfolgt vorzugsweise manuell unterstützt durch eine Bedienungsperson, die das Stückgut mittels eines Hilfswerkzeugs, beispielsweise eine Stange mit einem daran angebrachten Greifwerkzeug, auf den Übergabeförderer bewegt. Die Aufnahme von Stückgut vom Boden auf den Aufnahmeförderer erfolgt bevorzugt allein aufgrund des Antriebs des Aufnahmeförderers, in Verbindung mit einer materialschonenden Vorwärtsbewegung der Fahreinheit in Richtung auf das aufzunehmende Stückgut, gegebenenfalls unterstützt durch die Bedienungsperson. Während des ersten Schritts sind mehrere obere Entladestellungen möglich, bevorzugt eine erste obere Entladestellung, in der sich das Übernahmeende in einer ersten Höhe befindet, etwa in einer größtmöglichen Höhe über dem Boden, in der das Aufnahmeende noch den Boden berührt, oder knapp darüber ist, etwa 5 mm bis 2 cm darüber, während der Aufnahmeförderer eine vertikale Stellung einnimmt und seine unverkürzte Ausgangslänge besitzt, und eine zweite obere oder mittlere Entladestellung, in der sich das Übernahmeende in einer zweiten Höhe befindet, die kleiner als die erste Höhe ist, etwa in einer niedrigstmöglichen Höhe über dem Boden, in der der Aufnahmeförderer weitestgehend verkürzt ist und eine vertikale Stellung einnimmt. Zwischen diesen Extremstellungen sind beliebige Zwischenstellungen ansteuerbar.

Bevorzugt wird vor oder während dem ersten Schritt die Vorrichtung soweit wie möglich entgegen der Förderrichtung in den Laderaum oder in Richtung auf das aufzunehmende Stückgut vorwärtsbewegt, bis der vorzugsweise vertikal stehende Aufnahmeförderer gegen Stückgut anzuliegen beginnt, damit nach Möglichkeit von oben herabfallende oder heruntergezogene Stückgüter unmittelbar auf den Übergabeförderer und nicht auf den Boden vor den Aufnahmeförderer fallen. Die Vorrichtung kann vor oder während dem zweiten Schritt in mehrere aufeinanderfolgende untere Entladestellungen gebracht werden, insbesondere in die bevorzugte untere Entladestellung, wobei der Aufnahmeförderer, ausgehend von seiner senkrechten Stellung in der oberen Entladestellung, in einem oder in mehreren Schritt(en) oder stufenlos in Richtung auf eine schräg geneigte oder im Wesentlichen waagerechte Stellung bewegt wird, während sich das Aufnahmeende auf oder unmittelbar über dem Boden befindet. Während oder vor dem zweiten Schritt kann die Vorrichtung weiter in dem Laderaum oder in Richtung auf das zu entladende Stückgut vorwärtsbewegt werden, beispielsweise während, bevor oder nachdem die Vorrichtung in eine andere obere Entladestellung gebracht worden ist.

Bedarfsweise können die ersten und zweiten Schritte abwechselnd wiederholt werden, bis der Laderaum vollständig entladen ist. Auf dem Boden des Laderaums liegendes Stückgut kann durch Verfahren der Vorrichtung in Richtung des Stückguts, oder entgegen der Förderrichtung, aufgenommen werden, mit in der unteren Entladestellung befindlicher Vorrichtung.

Ein Vorteil der Erfindung liegt darin, dass die Bedienungsperson praktisch keine Hubarbeit beim Entladen zu leisten hat, da die zu entladenden und von der Vorrichtung aufzunehmenden Stückgüter lediglich aus ihrer gestapelten Position heruntergezogen oder aus einer liegenden Position wenigstens teilweise auf den Aufnahmeförderer gezogen werden müssen. Es kommt hinzu, dass die Bedienungsperson gut vor möglicherweise herabfallenden Stückgütern geschützt ist.

Die Erfindung wird nachfolgend anhand eines Ausführungsbeispiels der Vorrichtung und des Verfahrens erläutert, wobei auf eine Zeichnung Bezug genommen ist, in der
Fig. 1 eine schematische perspektivische Ansicht der erfindungsgemäßen Vorrichtung zeigt, wobei eine Aufnahmestellung dargestellt ist,
Fig. 2 eine perspektivische Ansicht der Vorrichtung in einer Transportstellung zeigt,
Fig. 3 eine Ansicht entsprechend Fig. 2 beim Einfahren in einen mit Stückgut beladenen Laderaum oder in einen Container zeigt,
Fig. 4 eine Seitenansicht, im vorderen Bereich im Längsschnitt, der Vorrichtung in der in Fig. 3 dargestellten Stellung zeigt,
Fig. 5 eine perspektivische Ansicht der Vorrichtung in einer ersten oberen Entladestellung zeigt,
Fig. 6 eine Seitenansicht, im vorderen Bereich im Längsschnitt, der Vorrichtung in der in Fig. 5 dargestellten Stellung zeigt,
Fig. 7 eine perspektivische Ansicht der Vorrichtung in einer zweiten oberen oder mittleren Entladestellung zeigt,
Fig. 8 eine Seitenansicht, im vorderen Bereich im Längsschnitt, der Vorrichtung in der Stellung gemäß Fig. 7 zeigt,
Fig. 9 eine perspektivische Ansicht der Vorrichtung in einer unteren Entladestellung zeigt,
Fig. 10 eine Seitenansicht, im vorderen Bereich im Längsschnitt, der Vorrichtung in einer Stellung gemäß Fig. 9 zeigt,
Fig. 11 eine vergrößerte schematische Seitenansicht des Aufnahmeendes des Aufnahmeförderers in der unteren Entladestellung zeigt,
Fig. 12 eine schematische Draufsicht auf die Vorrichtung mit dem Kopfende des Abförderers zeigt,
Fig. 13 eine schematische Draufsicht auf die Fahreinheit zeigt, und
Fig. 14 eine Vorderansicht der Vorrichtung zeigt.

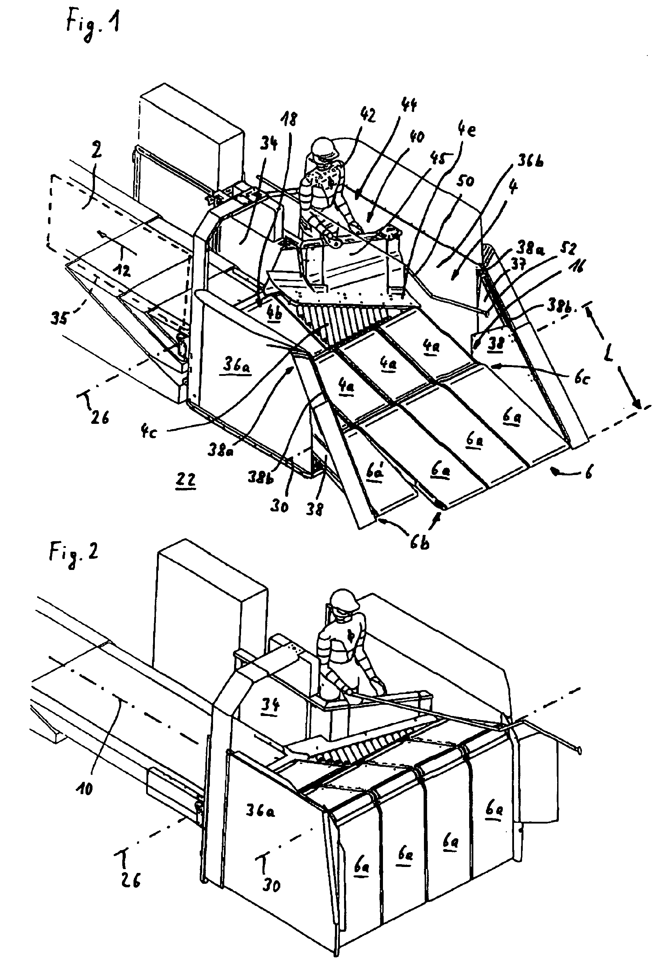

Fig. 2 bis 4 zeigen die Vorrichtung in einer Transportstellung, in der die Vorrichtung in eine kompakte Stellung gebracht ist, in der der Aufnahmeförderer 6 frei an der zweiten Schwenkachse 30 nach unten hängt, während Fig. 1 die Vorrichtung in einer unteren Entladestellung zeigt.

Die Vorrichtung weist einen Abförderer 2, einen Übergabeförderer 4 und einen Aufnahmeförderer 6 auf, die unmittelbar aneinander anschließend angeordnet sind. Etwaige Abstände oder Lücken zwischen benachbarten Förderern sind zumindest kleiner als eine kleinste Abmessung (Dicke, Breite, Höhe, Durchmesser usw.) des zu entladenden Stückguts, beispielsweise kleiner als 5 cm, 3 cm, 2 cm oder 1 cm. Die Förderer können an einem gemeinsamen Maschinengestell angeordnet und dadurch fest miteinander verbunden sein, oder sie können unabhängig voneinander als Einzelförderer angeordnet sein, deren Position sich gemäß der Erfindung verändern lässt. Im Rahmen der vorliegenden Beschreibung sind die Aufnahme- und Übergabeförderer als eine Einheit an einem gemeinsamen Gestell oder Rahmen angeordnet, auf einer Fahreinheit 8, die eine Verfahrbarkeit der Förderer 2, 4 und 6 entlang und quer zu einer Längsrichtung 10, die mit einer Förderrichtung 12 der Förderer übereinstimmt, zulässt.

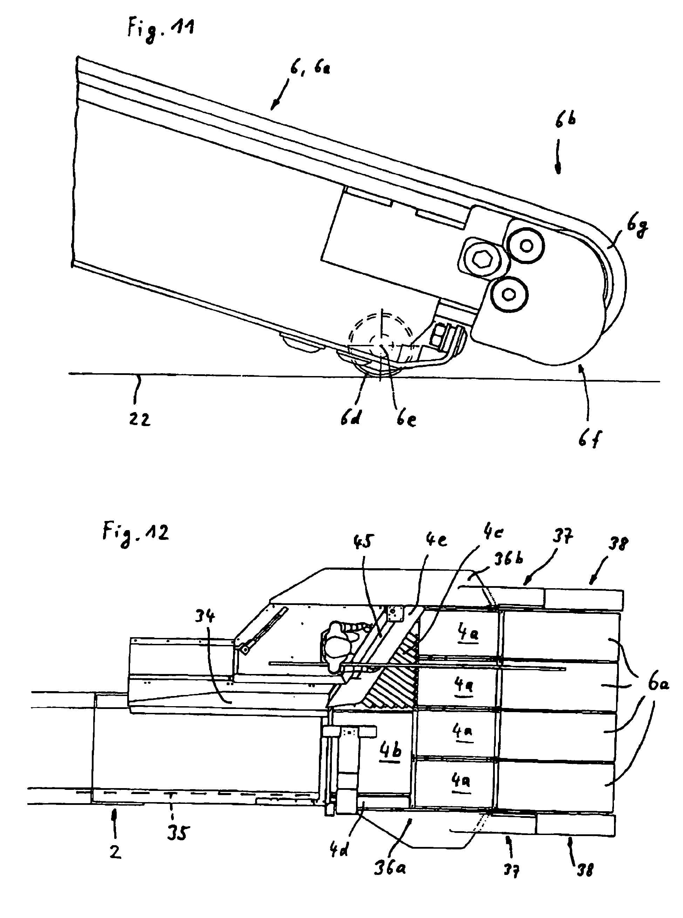

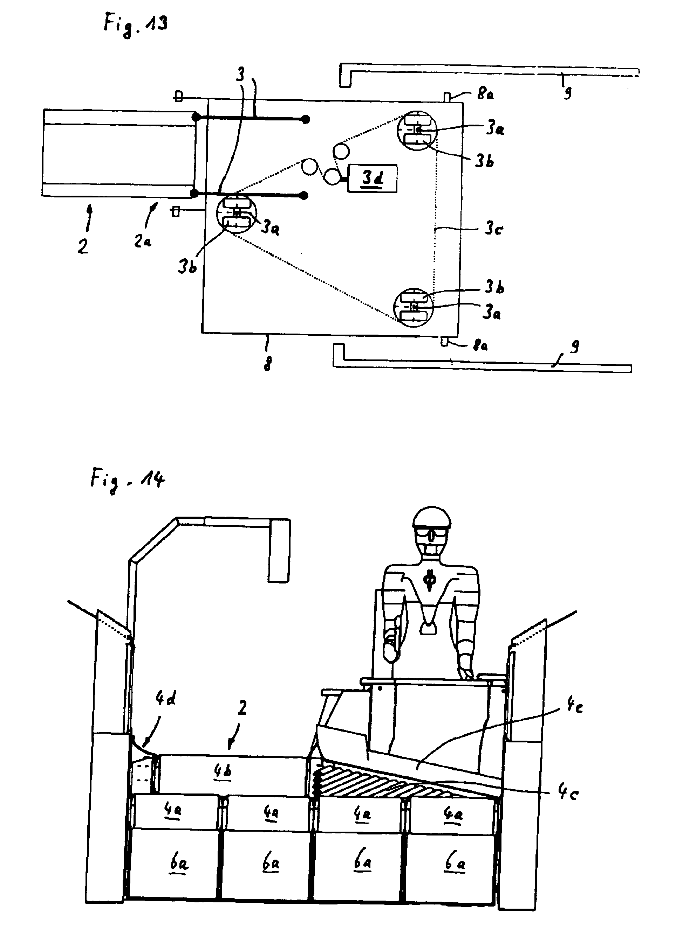

Fig. 12 zeigt eine schematische Draufsicht auf ein Kopfende 2a des Abförderers 2 der Vorrichtung, und Fig. 13 eine Draufsicht auf die Fahreinheit 8 und deren Verbindung mit dem Kopfende 2a des Abförderers 2. Abförderer 2 und Fahreinheit 8 sind über zwei Koppelstangen 3 miteinander verbunden, die eine gewisse relative Beweglichkeit im Sinne einer Toleranz zum Ausgleich von Bodenunebenheiten o.ä. zwischen Abförderer 2 und Fahreinheit 8 zulassen. Die Fahreinheit 8 weist an ihrer Unterseite drei jeweils um eine vertikale Lenkachse 3a lenkbare Lenkrollen 3b auf, von denen mindestens eine motorisch angetrieben ist, um die Fahreinheit 8 vorwärts, rückwärts oder schräg verfahren zu können. Die Lenkachsen 3a sind bevorzugt an Ecken eines gleichschenkligen oder gleichseitigen Dreiecks angeordnet, wobei die Lenkrollen 3b über einen von einem Lenkantrieb 3d motorisch angetriebenen Kettentrieb 3c in identischer Lenkstellung miteinander gekoppelt und dadurch in ihrer Lenkstellung synchronisiert sind. Dadurch ist gewährleistet, dass die Fahreinheit 8 bei Verfahrbewegungen nicht um eine vertikale Achse verdreht wird, sondern stets ihre in Fig. 13 ersichtliche Orientierung und ihre Ausrichtung in Längsrichtung 10 beibehält. Zwei seitliche Abstandssensoren 8a dienen zur Positionierung beim Einfahren der Vorrichtung in den Laderaum zwischen seitlichen Wänden 9.

Der Abförderer 2 ist als Teleskopförderer ausgebildet, wobei lediglich ein Kopfende 2a und ein daran anschließender Anfangsbereich des Abförderers 2 dargestellt ist, nicht hingegen ein dem Kopfende 2a gegenüberliegendes Abgabeende. Bei ortsfest fixiertem Abgabeende kann der gesamte in Fig. 1 dargestellte Teil der Vorrichtung auf dem Fahrwagen 8 in Längsrichtung 10 vor- und zurückbewegt werden, ohne die Abförderung von Stückgut zu beeinträchtigen. In einer bevorzugten Anwendung zur Entleerung eines mit Stückgut lose beladenen Containers, Trailers oder einer Wechselbrücke, beispielsweise beladen mit Paketen und Päckchen, kann auf diese Weise das Kopfende 2a des Abförderers 2 unter Mitnahme des Übergabeförderers 4 und des Aufnahmeförderers 6 durch Verfahren der Fahreinheit 8 entgegen der Förderrichtung 12 vorgeschoben werden, bis der Aufnahmeförderer 6 unmittelbar vor oder bereits in Kontakt mit aufgestapelten oder aufgehäuften Stückgütern steht.

Der Übergabeförderer 4 ist in der dargestellten Ausführungsform mehrfach unterteilt und besteht aus vier nebeneinander angeordneten Übergabeförderelementen in Form von Bandförderern mit Förderbändern 4a, einem nachgeordneten weiteren Bandförderer mit Förderband 4b sowie einer seitlich angeordneten Rollenbahn 4c, die eine im Wesentlichen dreieckförmige oder trapezförmige Förderoberfläche bildet. Die Rollenbahn 4c hat schräg zur Längsrichtung 10 angeordnete Rollen, um eine zu einer vertikalen Längsmittelebene des Abförderers 2 gerichtete Förderkomponente zu erzielen. Seitliche Leitbleche 4d, e (Fig. 1, 14) bilden einen Übergang zwischen bewegten Förderelementen des Übergabeförderers und Seitenwangen 36, die weiter unten beschrieben sind. Der Übergabeförderer 4 weist somit eine Förderoberfläche auf, die sich zwischen einem vorderen Übernahmeende 16, einem hinteren Übergabeende 18 und zwei seitlichen Rändern erstreckt. Selbstverständlich ist der Übergabeförderer 4 nicht auf die dargestellte Kombination von Förderbändern und Rollenbahnen beschränkt, sondern könnte ganz oder teilweise mit Förderbändern, Gliederbändern, Rollenbahnen oder mit noch anderen Fördererbauarten realisiert sein. Die seitlichen Leitbleche 4d, e können quer zur Förderrichtung 12 ansteigend ausgebildet sein, um eine gewünschte Leitwirkung für Stückgut in Richtung auf den Abförderer 2 zu bewirken. Ein rechteckiger Teil 4b, 4a, 4a der Förderoberfläche verläuft in Verlängerung des Abförderers 2 (Fig. 12), und ein trapezförmiger Teil 4c, 4a, 4a befindet sich in Förderrichtung gesehen rechts daneben.

Der Abförderer 2 erstreckt sich vorzugsweise horizontal, wobei eine Förderoberfläche des Abförderers am Kopfende 2a des Abförderers 2 in einer vorgegebenen Höhe H oberhalb eines Bodens 22, auf dem die Fahreinheit 8 ruht und verfährt, angeordnet ist. Die Höhe H kann beispielsweise zwischen 30cm und 1m liegen. Grundsätzlich ist eine nicht zu große Höhe über dem Boden anzustreben, damit in der unteren Entladestellung die Aufnahme- und Übernahmeförderer 4, 6 einen nicht zu großen Steigungswinkel zur Überbrückung des Höhenunterschieds vom Boden bis zum Abförderer aufweisen. Ein Steigungswinkel von Aufnahmeförderer und Übergabeförderer zwischen 10° und 30° zur Horizontalen ist vorteilhaft.

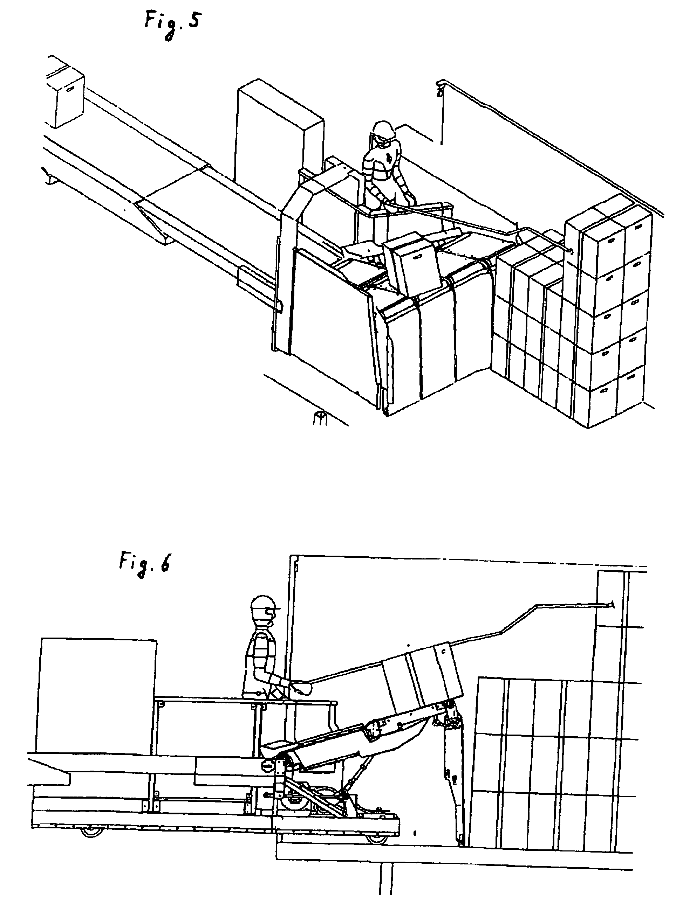

In der in Fig. 2 bis 4 dargestellten Transportstellung und in den in Fig. 5 bis 8 dargestellten Entladestellungen ist der Aufnahmeförderer 6 jeweils vertikal angeordnet und erstreckt sich von dem Übernahmeende 16 des Übergangsförderers 4 vertikal nach unten bis knapp über dem Boden 22, beispielsweise 1 mm bis 10 mm darüber (Entladestellung) oder endet in einem größeren Abstand, beispielsweise 5 bis 15 cm, oberhalb des Bodens (Transportstellung). In dem dargestellten Ausführungsbeispiel besteht auch der Aufnahmeförderer 6 aus einer Reihe von nebeneinander angeordneten einzelnen Aufnahmeförderelementen oder Förderbändern 6a in Form von Gurtförderern mit Fördergurten 6g (Fig. 11), wobei jedes Förderband 6a passiv längenanpassbar ist. Bei entsprechendem Druck gegen ein vorderes Aufnahmeende 6b des Aufnahmeförderers 6 bzw. der einzelnen Förderbänder 6a verkürzt sich das Förderband 6a gegen den Druck einer Rückstellfeder und verlängert sich bei Wegfall der Kraft wieder bis auf seine Ausgangslänge.

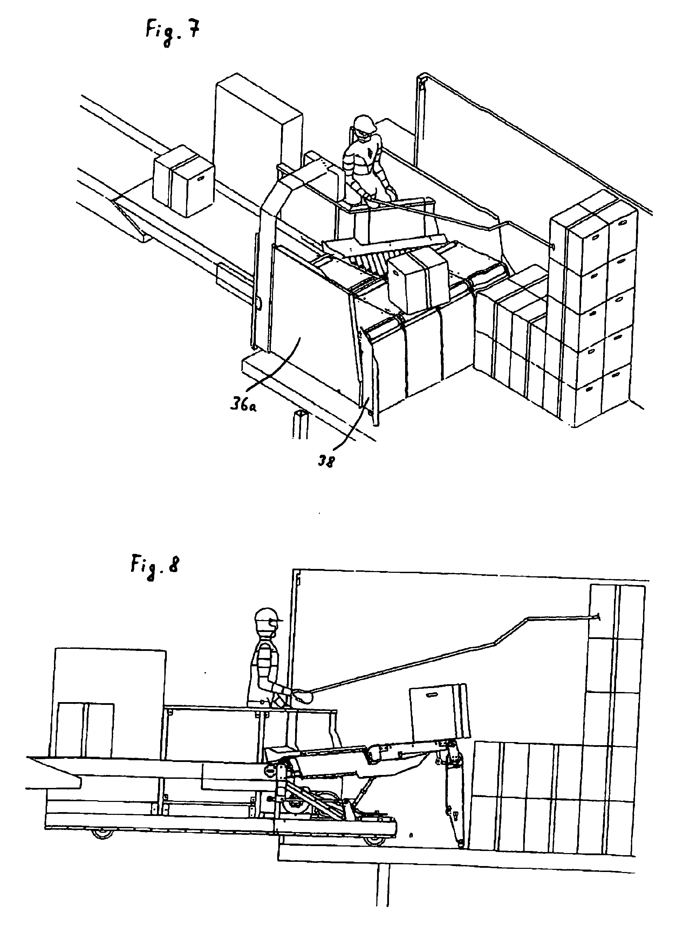

Fig. 2 bis 4 und Fig. 9, 10 zeigen eine Ausgangslänge L der Aufnahmeförderelemente 6a bzw. des Aufnahmeförderers 6 im Unterschied zu verkürzten oder minimalen Längen der Aufnahmeförderelemente 6a gemäß Fig. 7, 8. Die Eigenschaft der passiven Teleskopierbarkeit kann so eingestellt sein, dass sich der Aufnahmeförderer 6 ausgehend von einer geringen, in Förderrichtung 12 wirkenden Kraft bereits verkürzen lässt, oder aber so, dass sich der Aufnahmeförderer 6 erst ab einer bestimmten Mindestkraft verkürzen lässt, deren Größe als Schwellenwert einstellbar sein kann.

Der Übergabeförderer 4 ist um eine erste Schwenkachse 26, die horizontal und quer zur Förderrichtung 12 benachbart zum Kopfende 2a des Abförderers 2 ortsfest angeordnet ist, höhenverschwenkbar gehalten und somit in seinem vorderen Bereich, insbesondere mit seinem Übernahmeende 16, höhenverstellbar. Der Aufnahmeförderer 6 ist um eine zweite Schwenkachse 30, die benachbart zu dem Übernahmeende 16 des Übergabeförderers 4 horizontal und quer zur Förderrichtung 12 angeordnet ist, höhenverschwenkbar und damit in seinem Aufnahmeende 6b höhenverstellbar, relativ zum Übernahmeende, so dass vielfältige Verstellmöglichkeiten für Übergabe- und Aufnahmeförderer 4, 6 bestehen. Im Rahmen der Erfindung ist vorgesehen, dass sich das Aufhahmeende 6b des Aufnahmeförderers 6 stets auf dem Boden 22 oder unmittelbar oberhalb des Bodens 22 befindet.

Bei Ausführung des Übergabeförderers 4 als Band- oder Rollenförderer verläuft die erste Schwenkachse 26 bevorzugt durch eine am Übergabeende 18 angeordnete Antriebs- oder Umlenkrolle des Übergabeförderers 4, oder durch eine benachbarte Umlenkrolle des Abförderers 2. In entsprechender Weise verläuft die zweite Schwenkachse 30 bei Ausbildung des Aufnahmeförderers als Band- oder Rollenförderer bevorzugt durch eine am Abgabeende 6c angeordnete Antriebs- oder Umlenkrolle des Aufnahmeförderers 6, oder durch eine am Übernahmeende 16 des Übergabeförderers 4 angeordnete Antriebs- oder Umlenkrolle.

Bevorzugt liegt die Förderoberfläche des Übergabeförderers 4 im Bereich des Übergabeendes 18 um ein gewisses Maß oberhalb eines benachbarten Endes der Förderoberfläche des Abförderers 2, um zu vermeiden, dass kleine Stückgüter im Übergangsbereich zwischen Übergabe- und Abförderer hängen bleiben. Dies kann beispielsweise dadurch erreicht werden, dass eine Antriebs- oder Umlenkrolle am Übergabeende 18 des Übergabeförderers 4 in gleicher Höhe wie eine am Kopfende 2a des Abförderers 2 befindliche Antriebs- oder Umlenkrolle angeordnet ist, oder höher, wobei die erste Schwenkachse 26 durch die Antriebs-oder Umlenkrolle am Übergabeende 18 verläuft. Eine entsprechende Anordnung ist bevorzugt zwischen Aufnahme- und Übergabeförderer vorzusehen, wobei zweckmäßigerweise eine im Bereich des Abgabeendes 6c befindliche Antriebs- oder Umlenkrolle, durch die die zweite Schwenkachse 30 verläuft, in gleicher Höhe oder höher als eine am Übernahmeende 16 des Übergabeförderers 4 befindliche Antriebs- oder Umlenkrolle angeordnet ist.

Neben dem Abförderer 2 sind Seitenwangen 34 (und 35, gestrichelt angedeutet in Fig. 1, 12) angeordnet, die sich zumindest über einen Teil der Länge des Abförderers 2 im Bereich von dessen Kopfende 2a erstrecken, insbesondere beginnend am Kopfende 2a. Weitere Seitenwangen 36a, b sind seitlich neben dem Übergabeförderer 4 vorgesehen. Die Seitenwangen 34, 35, 36a, b sind dicht benachbart zu den jeweiligen Förderern angeordnet und verhindern, dass einzelne Stückgüter seitlich von den Förderern herabfallen können. Die zur Mitte oder nach innen verlaufende Seitenwange 36b erleichtert die Beförderung von außermittig auf dem Übergabeförderer 4 oder dem Aufnahmeförderer 6 befindlichen Stückgütern auf den Abförderer 2, indem den Stückgütern eine zur Längsmittelebene des Abförderers gerichtete Förderkomponente erteilt wird.

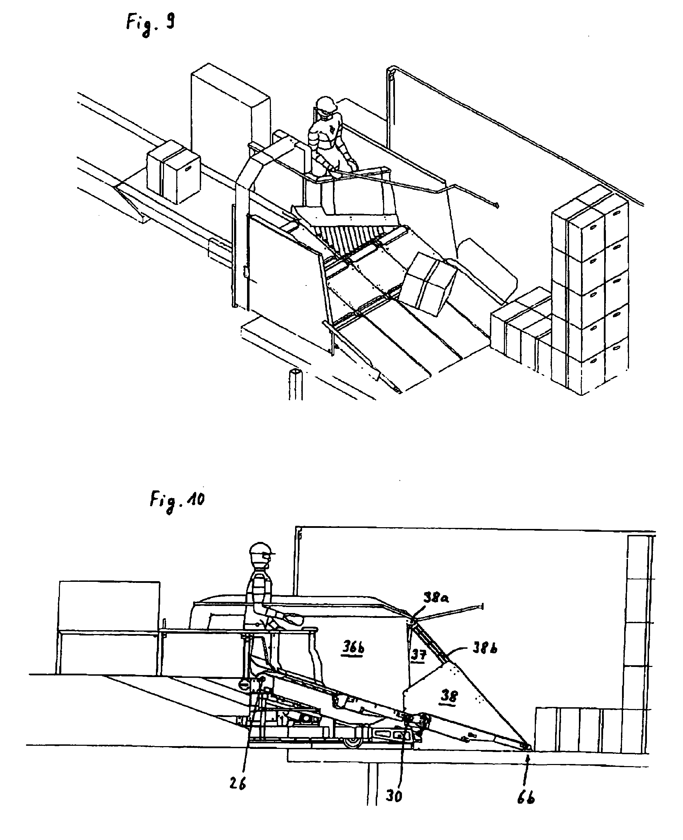

Ausfahrbare Seitenwangen 37, 38 erstrecken sich neben dem Aufnahmeförderer 6. Fig. 1 und 10 erläutern ein Ausführungsbeispiel. Die Seitenwangen 38 sind an einer oberen Ecke 38a an den neben dem Übergabeförderer 4 angeordneten Seitenwangen 36a, b schwenkbar angelenkt und mittels einer teleskopierbaren Linearführung 38b gelenkig mit dem vorderen Ende oder Aufnahmeende 6b verbunden sein, so dass sie automatisch ausgefahren werden, wenn der Aufnahmeförderer 6 von einer oberen in die untere Entladestellung bewegt wird, und umgekehrt.

Seitlich neben dem Kopfende 2a des Abförderers 2 und/oder neben einem diesem benachbarten Bereich des Übergabeförderers 4 ist eine horizontale Arbeitsplattform 40 angeordnet, die in einer vorgegebenen Höhe, beispielsweise in einer Höhe von 0,5 H, über dem Boden 22 fest angebracht oder höhenverstellbar sein kann, wobei eine Bedienungsperson 42, die auf der Arbeitsplattform 40 steht, die Höhenverstellung manuell vornehmen kann. Alternativ kann die Höhenverstellung im Zusammenhang mit der Auswahl oder dem Anfahren einer bestimmten Entlade- oder Aufnahmestellung automatisch durch eine entsprechend eingerichtete Steuerung ausgeführt werden. Zum Schutz der Bedienungsperson 42 kann die Seitenwand 36b im Bereich der Arbeitsplattform 40 eine vorgegebene Höhe aufweisen und in einem gebogenen oder abgewinkelten Verlauf einen geschützten Arbeitsbereich 44 umschließen. Eine Tür 45 ermöglicht der Bedienungsperson, den Aufnahme- bzw. Übergabeförderer im Stillstand zu betreten, beispielsweise zum Entfernen von nicht förderfähigen Fördergütern.

Die gegenüber der Arbeitsplattform 40 neben dem Übergabeförderer angeordneten Seitenwangen 36a (in dem dargestellten Beispiel in Förderrichtung 12 gesehen links angeordnet) sind entweder parallel zur Längsrichtung 10 oder unter einem kleinen Winkel von etwa 5° bis 20°, bevorzugt höchstens 10°, dazu angeordnet, wobei ihr Abstand von einer Längsmittelebene des Abförderers 2 entgegen der Förderrichtung zunimmt. Die auf der Seite der Arbeitsplattform 40 angeordneten Seitenwangen 36b (in dem dargestellten Beispiel rechts angeordnet, in Förderrichtung gesehen) verlaufen in einem der Arbeitsplattform 40 benachbarten Bereich unter einem Winkel von ca. 30° bis 60° zur Längsrichtung 10, und in einem zwischen Arbeitsplattform und Aufnahmeförderer befindlichen Bereich neben dem Übergabeförderer 4 annähernd parallel zur Längsrichtung.

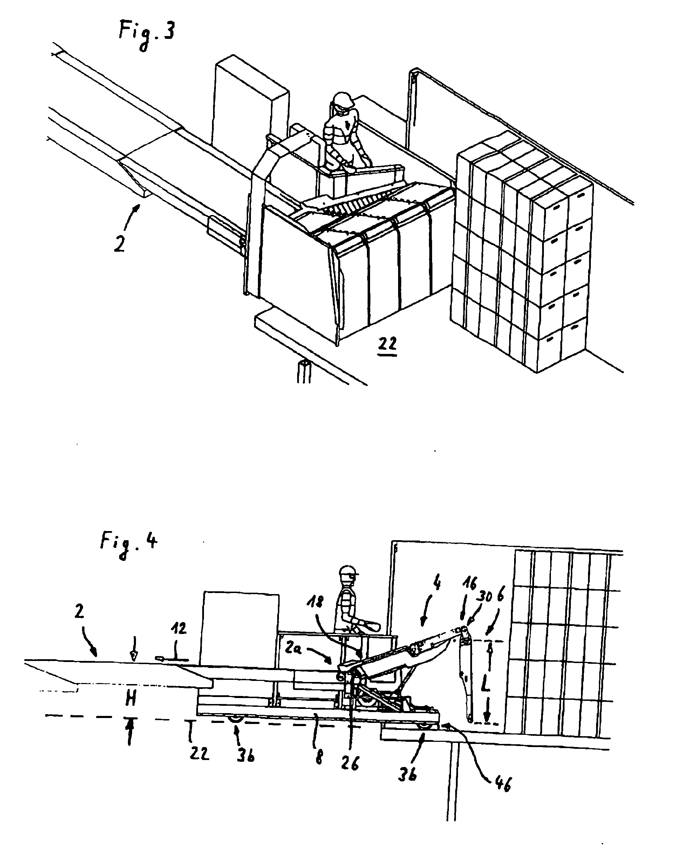

An den Seitenwangen 36a, b oder 38 und/oder seitlich an dem Aufnahmeförderer 6 können Bürsten oder Profilelemente aus elastischem Material oder ähnlich wirkende Spaltüberbrückungsmittel zum Ausgleich von maßlichen Toleranzen wie etwa Wandunebenheiten von Seitenwänden eines zu entladenden Laderaums angebracht sein, damit keine Stückgüter seitlich herunterfallen oder zwischen Seitenwangen und Wand des Laderaums oder bei Schiefstellung des Ladungsträgers gelangen können. Wie Fig. 4 zeigt, können an dem Fahrwagen 8 vorn und gegebenenfalls auch an den Seiten Abweiselemente in Form von Bürsten 46 oder Profilelementen angeordneten sein, damit nicht eventuell auf dem Boden liegende Stückgutteile überfahren werden.

Die Vorrichtung ist zur Verwendung zunächst in der in Fig. 4 bis 6 dargestellten ersten oberen Entladestellung, in der in Fig. 7, 8 dargestellten zweiten oberen Entladestellung und dann in der in Fig. 1, 9 und 10 dargestellten unteren Entladestellung ausgelegt, in der Stückgüter vom Boden 22 aufgenommen und über die Aufnahme- und Übergabeförderer 6, 4 auf den Abförderer 2 transportiert werden können. Aufgrund der Schwenkbarkeit des Übergabeförderers 4 um die erste Schwenkachse 26 und der Schwenkbarkeit des Aufnahmeförderers 6 um die zweite Schwenkachse 30 sind unterschiedlich geneigte untere Entladestellungen möglich, abgesehen von der in Fig. 1, 9 und 10 dargestellten "geraden" und bevorzugten Stellung, in der der Aufnahmeförderer 6 einen gleichen Neigungswinkel von etwa 10° bis 30° zur Horizontalen wie der Übergabeförderer 4 aufweist, so dass beide Förderer im Wesentlichen in einer gemeinsamen Ebene angeordnet sind. Alternativ zu dieser Stellung kann der Aufnahmeförderer 6 steiler als der Übergabeförderer 4 angeordnet sein, etwa unter 20° bis 40°, wobei sich eine Zwischenstellung zwischen der Entladestellung nach Fig. 7, 8 und der nach Fig. 1 ergibt, oder aber flacher als dieser, etwa unter 0° bis 20°, wobei dann die zweite Schwenkachse 30 oder ein Übergangsbereich, der das Abgabeende 6c des Aufnahmeförderers 6 und das Übernahmeende 16 des Übergabeförderers 4 umfasst, in einer geringeren Höhe über dem Boden 22 angeordnet sind als in der in Fig. 1 dargestellten Stellung. Eine Grenzstellung ist erreicht, wenn die zweite Schwenkachse 30 unmittelbar über dem Boden 22 liegt und der Aufnahmeförderer 6 horizontal auf dem Boden angeordnet ist. Eine solche untere Entladestellung kann vorteilhaft sein, um auf dem Boden liegende Stückgüter aufzunehmen.

Zur Entladung von auf einem Boden eines Laderaums gestapeltem Stückgut, beispielsweise von Paketen und Päckchen aus einem Container oder einer Wechselbrücke, wird die Vorrichtung zunächst in Transportstellung (Fig. 2 bis 4) mit Hilfe des Fahrwagens 8 dicht an eine Ladeöffnung des Laderaums auf dessen Boden 22 herangefahren. Ob die Vorrichtung in eine obere Entladestellung entsprechend der ersten oder zweiten oberen Entladestellung oder in eine untere Entladestellung gebracht wird, hängt wesentlich davon ab, ob das Stückgut in dem Container über eine gewisse Höhe hinaus gestapelt ist oder nicht, sowie von der Art und Empfindlichkeit der Stückgüter, also davon, ob diese ohne die Gefahr einer Beschädigung aus der gestapelten Höhe bis auf den Aufnahmeförderer fallen können, wenn sich dieser in einer Aufnahmestellung befindet, oder ob eine Beschädigungsgefahr besteht und es vorzuziehen ist, die Stückgüter lediglich auf den Übergabeförderer fallen zu lassen, der sich in der ersten oder zweiten oberen Entladestellung in einer deutlich größeren Höhe befindet als der Aufnahmeförderer in der unteren Entladestellung. Bei Stückgütern mit einer bestimmten Empfindlichkeit, etwa Postpakete, bei denen bei einem Fall aus einer Höhe von bis zu 1 m nicht mit einer Beschädigung zu rechnen ist, kann in einer unteren Entladestellung gearbeitet werden, sofern die Stückgüter nicht deutlich höher als 1 m gestapelt sind. Bei größeren Stapelhöhen ist zunächst in einer oberen Entladestellung, beispielsweise in der ersten oder zweiten oberen Entladestellung, zu arbeiten, und danach in der unteren Entladestellung.

In der Regel wird in einem ersten Schritt zunächst in der ersten oberen Entladestellung gearbeitet, in der die Bedienungsperson 42 Stückgüter, die nicht von selbst auf den Übergabeförderer 4 fallen, mittels eines Hilfswerkzeugs 50 aus ihrer gestapelten Position auf den Übergabeförderer 4 verbringt. Das Hilfswerkzeug 50 kann ein Rohr oder Stab aus Aluminium, Holz oder Kunststoff, z.B. Carbon, sein, an dessen von der Bedienungsperson abgekehrten Ende ein Greifwerkzeug 52 befestigt ist, bei dem es sich im einfachsten Fall um einen Haken oder eine senkrecht zu dem Rohr oder Stab angeordnete Platte handeln kann. Alternativ oder zusätzlich kann als Greifwerkzeug ein Saug- oder Nadelgreifer in einfacher oder mehrfacher Ausführung vorgesehen sein. Weiter besteht die Möglichkeit, dass die Bedienungsperson in Abhängigkeit von der konkreten Situation eines von mehreren unterschiedlichen Hilfswerkzeugen und damit ein passendes Greifwerkzeug auswählt. Die Bedienungsperson kann situationsbedingt ein Stückgut entweder hintergreifen oder mit einem Greifer von vorn greifen und aus der gestapelten Position herausziehen oder umstürzen, worauf dann das Stückgut im Wesentlichen im freien Fall auf den Übergabeförderer 4 fällt. Von dort wird das Stückgut durch den Übergabeförderer auf den Abförderer 2 und von diesem einer vorab eingerichteten Zielstelle zugeführt. Der vertikal stehende Aufnahmeförderer 6 verhindert in dieser Entladestellung an sich lediglich, dass Stückgut unter den Übernahmeförderer gerät.

Anschließend an eine Entladetätigkeit in der ersten oberen Entladestellung kann mit dem Entladen in einer zweiten oberen oder mittleren Entladestellung fortgefahren werden, was in Fig. 7 und 8 dargestellt ist. Im Vergleich zur ersten oberen Entladestellung nach Fig. 4 bis 6 ist der Übertragungsförderer um einen bestimmten Winkel um die erste Schwenkachse 16 heruntergeschwenkt, wobei der Aufnahmeförderer 6 weiterhin senkrecht angeordnet ist und auf dem Boden 22 steht, wobei seine Länge nunmehr maximal verkürzt ist. In der zweiten oberen Entladestellung kann der Übernahmeförderer 4 eine geringe Neigung aufweisen, beispielsweise höchstens 10°, 20° oder 30° zur Horizontalen, oder horizontal angeordnet sein.

In einem zweiten Schritt wird die Vorrichtung in eine geeignete untere Entladestellung gebracht, d.h. der Übergabeförderer 4 wird um die erste Schwenkachse 26 abwärts geschwenkt, und der Aufnahmeförderer 6 wird gleichzeitig oder vorher in entgegengesetzter Schwenkrichtung verschwenkt, entweder passiv allein durch den Übergabeförderer oder aktiv mittels eines entsprechenden Schwenkantriebs, bis eine gewünschte Winkelstellung beider Förderer erreicht ist, wobei das Aufnahmeende 6b des Aufnahmeförderers 6 auf oder unmittelbar über dem Boden 22 angeordnet ist. Auch mehrere aufeinanderfolgende unterschiedliche untere Aufnahmestellungen sind möglich. Vorzugsweise befindet sich das Aufnahmeende des Aufnahmeförderers während des gesamten Verstellvorgangs auf oder unmittelbar oberhalb des Bodens, damit keine Stückgüter unter den Aufnahmeförderer gelangen können. Während oder vor dem zweiten Schritt kann die Vorrichtung zunächst in Förderrichtung von dem aufzunehmenden Stückgut wegbewegt werden, um die Verstellbewegung des Aufnahmeförderers zu ermöglichen oder zu unterstützen, und dann in Richtung auf das zu entladende Stückgut vorwärtsbewegt zu werden, damit das Aufnahmeende des Aufnahmeförderers in Kontakt mit dem aufzunehmenden Stückgut bleibt bzw. kommt. Vorteilhaft führt der Aufnahmeförderer bereits während des Verstellvorgangs und/oder während des Heranfahrens der Vorrichtung in Richtung auf das zu entladende Stückgut eine Förderbewegung in Förderrichtung 12 aus, um nach Möglichkeit Stückgut, das mit dem Aufnahmeende in Kontakt kommt, sogleich ansatzweise aufzunehmen, beispielsweise einseitig anzuheben, so dass bei weiterer Vorschubbewegung der Vorrichtung in Richtung auf das zu entladende Stückgut in vielen Fällen bereits eine selbsttätige Aufnahme von auf dem Boden liegendem Stückgut erfolgt.

Bei Störungssituationen, in denen sich Stückgutteile vor dem Aufnahmeförderer oder seitlich zwischen Aufnahmeförderer oder Übergabeförderer und einer Wand befinden, versucht die Bedienungsperson zunächst, mit Hilfe des Hilfswerkzeugs die Stückgutteile auf den Aufnahmeförderer zu ziehen. Während dieses Vorgangs bleiben die Förderer in Betrieb.

Daneben kann die Bedienungsperson einzelne ausgewählte oder sämtliche Förderbänder oder Rollenbahnen kurzzeitig in einer zur Förderrichtung 12 entgegengesetzten Richtung antreiben, d.h. reversieren, um einen Stau zu lösen.

Für den Fall eines Staus von Stückgutteilen im Bereich des Kopfendes des Abförderers kann die Bedienungsperson entweder von Hand oder mit einem Hilfsinstrument über die Seitenwange greifen, um die Störung zu beseitigen, oder sie kann den Übergabe- oder Abförderer betreten. Hierfür kann die Tür 45 eine Sicherheitseinrichtung aufweisen, die entweder bei Öffnen der Tür den Aufnahme- und Übergabeförderer abschaltet oder ein Öffnen der Tür erst dann freigibt, wenn die Förderer abgestellt sind.

Fig. 11 zeigt in einer vergrößerten seitlichen Detailansicht das Aufnahmeende 6b des Aufnahmeförderers 6, wobei man eine Stützrolle 6d erkennt, die mit horizontaler Drehachse 6e an dem Aufnahmeförderer 6 gehalten ist und die den Aufnahmeförderer 6 auf dem Boden 22 leicht verschieblich abstützt. Man erkennt, dass die Stützrolle 6d ab einem bestimmten Neigungswinkel des Aufnahmeförderers 6, wenn dieser steiler gestellt wird, vom Boden 22 abhebt, wobei sich dann zunächst das Aufnahmeende 6b des Aufnahmeförderers 6 auf Stützelementen 6f auf dem Boden 22 abstützt. Wird der bzw. werden die Aufnahmeförderer 6 durch Verschwenken noch steiler gestellt, verlieren auch die Stützelemente 6f den Kontakt zum Boden, und der Fördergurt 6g des Aufnahmeförderers tritt in Kontakt mit dem Boden, bevor der Aufnahmeförderer ganz vom Boden abgehoben wird.

### Bezugszeichenliste

- 2: Abförderer
- 2a: Kopfende
- 3: Koppelstange
- 3a: Lenkachse
- 3b: Lenkrolle
- 3c: Kettentrieb
- 3d: Lenkantrieb
- 4: Übergabeförderer
- 4a: Förderband
- 4b: weiteres Förderband
- 4c: Rollenbahn
- 4d, e: Leitblech
- 6: Aufnahmeförderer
- 6a, 6a': Förderband (Aufnahmeförderelement)
- 6b: Aufnahmeende
- 6c: Abgabeende
- 6d: Stützrolle
- 6e: Drehachse
- 6f: Stützelement
- 6g: Fördergurt
- 8: Fahrwagen (Fahreinheit)
- 8a: Abstandssensor
- 9: seitliche Laderaumwand
- 10: Längsrichtung
- 12: Förderrichtung
- 16: Übernahmeende
- 18: Übergabeende
- 22: Boden
- 26: erste Schwenkachse
- 30: zweite Schwenkachse
- 34, 35, 36a, b, 37, 38: Seitenwange
- 38a: Ecke (Anlenkpunkt)
- 38b: Linearführung
- 40: Arbeitsplattform
- 42: Bedienungsperson
- 44: Arbeitsbereich
- 45: Tür
- 46: Bürste (Abweiselement)
- 50: Hilfswerkzeug
- 52: Greifwerkzeug

- H: Höhe (von 2)
- L: Länge (von 6)

## Patentansprüche

1. Vorrichtung zum Entladen von auf einem Boden (22) eines Laderaums gestapeltem, geschüttetem oder lose gehäuftem Stückgut, mit einem Aufnahmeförderer (6), der ein frei vorstehendes Aufnahmeende (6b) und ein hinteres Abgabeende (6c) aufweist, einem Abförderer (2) und einem dazwischen angeordneten Übergabeförderer (4), der ein vorderes, an das Abgabeende (6c) des Aufnahmeförderers (6) anschließendes Übernahmeende (16) und ein hinteres, an ein Kopfende (2a) des Abförderers (2) anschließendes Übergabeende (18) aufweist, wobei der Übergabeförderer (4) um eine horizontale, quer zu seiner Förderrichtung (12) an dem Übergabeende (18) benachbart zu dem Kopfende (2a) des Abförderers (2) angeordnete erste Schwenkachse (26) höhenverschwenkbar gehalten ist, und der Aufnahmeförderer (6) um eine horizontale, quer zu seiner Förderrichtung (12) an dem Abgabeende (6c) benachbart zu dem Übernahmeende (16) des Übernahmeförderers (4) angeordnete zweite Schwenkachse (30) höhenverschwenkbar gehalten ist, **dadurch gekennzeichnet, dass** der Aufnahmeförderer (6) und der Übergabeförderer (4) durch Schwenken um die erste und zweite Schwenkachse (26, 30) in mindestens eine obere Entladestellung, in der sich eine Förderoberfläche des Übergabeförderers (4) im Wesentlichen waagerecht unter einen Winkel von höchstens 10°, 20°, 30°, oder 40° zur Horizontalen vor der ersten Schwenkachse (26), eine Förderoberfläche des Aufnahmeförderers (6) im Wesentlichen senkrecht unter einem Winkel von höchsten 10°, 20°, 30°, oder 40° zur Vertikalen unter der zweiten Schwenkachse (30) und das Aufnahmeende (6b) des Aufnahmeförderers (6) auf oder unmittelbar über dem Boden (22) des Laderaums befinden, oder in mindestens eine untere Entladestellung, in der sich die Förderoberflächen des Aufnahmeförderers (6) und des Übergabeförderers (4) im Wesentlichen waagerecht unter einem Winkel von höchstens 10°, 20°, 30°, oder 40° zur Horizontalen und das Aufnahmeende (6b) des Aufnahmeförderers (6) auf oder unmittelbar über dem Boden (22) des Laderaums befinden, bringbar sind.

2. Vorrichtung nach Anspruch 1, **dadurch gekennzeichnet, dass** der Abförderer (2) in einer vorgegebenen Höhe (H) oberhalb des Bodens (22) angeordnet ist, die einer halben Länge (L) des Aufnahmeförderers (6) entspricht.

3. Vorrichtung nach Anspruch 1 oder 2, **dadurch gekennzeichnet, dass** der Abförderer (2) teleskopierbar ist.

4. Vorrichtung nach einem der vorangehenden Ansprüche, **dadurch gekennzeichnet, dass** der Aufnahmeförderer (6) teleskopierbar oder passiv längenanpassbar ist.

5. Vorrichtung nach einem der vorangehenden Ansprüche, **dadurch gekennzeichnet, dass** der Übergabeförderer (4) und der Aufnahmeförder (6) auf einem gemeinsamen Maschinengestell angeordnet sind, das auf einer Fahreinheit (8) gesteuert verfahrbar ist.

6. Vorrichtung nach einem der vorangehenden Ansprüche, **dadurch gekennzeichnet, dass** der Übergabeförderer (4) an dem Übernahmeende (16) breiter ist als an dem Übergabeende und mit mindestens einem, insbesondere rechteckigen, dreieck- oder trapezförmigen, zum Übergabeende (18) hin verjüngt zulaufenden seitlichen Förderelement (4c, d) versehen ist.

7. Vorrichtung nach einem der vorangehenden Ansprüche, **dadurch gekennzeichnet, dass** der Aufnahmeförderer (6) mehrere parallel nebeneinander angeordnete Aufnahmeförderelemente (6a, 6a') aufweist, die unabhängig voneinander antreibbar, reversierbar, teleskopierbar oder passiv längenanpassbar sein können.

8. Vorrichtung nach einem der vorangehenden Ansprüche, **dadurch gekennzeichnet, dass** der Übergabeförderer (4) mehrere parallel nebeneinander angeordnete Übergabeförderelemente (4a) aufweist, die unabhängig antreibbar und reversierbar sein können.

9. Vorrichtung nach einem der vorangehenden Ansprüche, **dadurch gekennzeichnet, dass** benachbart zu dem Abförderer (2) und/ oder benachbart zu dem Übergabeförderer (4) Seitenwangen (34, 36) angeordnet sind, die schräg geneigt oder vertikal sein können.

10. Vorrichtung nach Anspruch 9, **dadurch gekennzeichnet, dass** außerhalb und benachbart zu einer Seitenwange (34, 36) eine Arbeitsplattform (40) für eine Bedienungsperson (42) angeordnet ist.

11. Verfahren zum Entladen von auf dem Boden (22) eines Laderaums gestapeltem, geschüttetem oder lose gehäuftem Stückgut, unter Verwendung einer Vorrichtung nach einen der vorangehenden Ansprüche, wobei in einem ersten Schritt die Vorrichtung in eine obere Entladestellung gebracht und Stückgut, das sich oberhalb einer vorgegebenen Entladehöhe oder oberhalb des Übergabeförderers (4) befindet, auf den Übergabeförderer verbracht wird, und in einem zweiten Schritt die Vorrichtung in eine untere Entladestellung gebracht wird und Stückgut, das sich unterhalb der vorgegebenen Entladehöhe oder auf dem Boden (22) des Laderaums befindet, auf den Aufnahmeförderer (6) verbracht wird.

12. Verfahren nach Anspruch 11, **dadurch gekennzeichnet, dass** in dem ersten Schritt die Vorrichtung nacheinander oder abwechselnd in eine erste obere Entladestellung und in eine zweite obere Entladestellung gebracht wird, wobei sich das Übernahmeende (16) in der ersten oberen Entladestellung in einer größeren Höhe über dem Boden (22) befindet als in der zweiten oberen Entladestellung.

13. Verfahren nach Anspruch 11 oder 12, **dadurch gekennzeichnet, dass** das Verbringen zumindest von oberhalb des Übergabeförderers (4) befindlichem Stückgut auf den Übergabeförderer (4) manuell durch eine Bedienungsperson (42) unterstützt wird, insbesondere mittels eines Hilfswerkszeugs (50).

14. Verfahren nach einem der Ansprüche Anspruch 11 bis 13, **dadurch gekennzeichnet, dass** vor oder während dem ersten Schritt die Vorrichtung soweit wie möglich in den Laderaum hineinbewegt wird, bis der insbesondere vertikal stehende Aufnahmeförderer (6) gegen Stückgut anzuliegen beginnt.

15. Verfahren nach einem der Ansprüche 11 bis 14, **dadurch gekennzeichnet, dass** die ersten und zweiten Schritte abwechselnd wiederholt werden, bis der Laderaum vollständig entladen ist.

16. Verfahren nach einem der Ansprüche 11 bis 15, **dadurch gekennzeichnet, dass** auf dem Boden (22) des Laderaums liegendes Stückgut durch Verfahren der in einer unteren Entladestellung befindlichen Vorrichtung entgegen der Förderrichtung (12) aufgenommen wird.

## Claims

1. Device for unloading piece goods that are stacked, poured or loosely piled on a floor (22) of a storage bay, with a receiving conveyor (6) that has a freely projecting receiving end (6b) and a rear discharge end (6c), a removal conveyor (2) and a transfer conveyor (4) which is arranged in between them and which has a front take-up end (16) adjoining the discharge end (6c) of the receiving conveyor (6) and a rear transfer end (18) adjoining a head end (2a) of the removal conveyor (2), wherein the transfer conveyor (4) is held such that it can be pivoted vertically around a horizontal first pivot axis (26) that is arranged cross-wise to its direction of conveyance (12) at the transfer end (18) adjacent to the head end (2a) of the removal conveyor (2), and the receiving conveyor (6) is held such that it can be pivoted vertically around a horizontal second pivot axis (30) that is arranged cross-wise to its direction of conveyance (12) at the discharge end (6c) adjacent to the take-up end (16) of the take-up conveyor (4), **characterised in that**
by pivoting around the first and second pivot axis (26, 30), the receiving conveyor (6) and the transfer conveyor (4) can be brought into at least one upper unloading position, in which a conveyor surface of the transfer conveyor (4) is located essentially horizontally at an angle of at most 10°, 20°, 30°, or 40° to the horizontal in front of the first pivot axis (26), a conveyor surface of the receiving conveyor (6) is located essentially vertically at an angle of at most 10°, 20°, 30°, or 40° to the vertical below the second pivot axis (30), and the receiving end (6b) of the receiving conveyor (6) is located on or immediately above the floor (22) of the storage bay, or can be brought into at least one lower unloading position, in which the conveyor surfaces of the receiving conveyor (6) and of the transfer conveyor (4) are located essentially horizontally at an angle of at most 10°, 20°, 30°, or 40° to the horizontal and the receiving end (6b) of the receiving conveyor (6) is located on or immediately above the floor (22) of the storage bay.

2. Device according to claim 1, **characterised in that** the removal conveyor (2) is arranged at a predetermined height (H) above the floor (22), corresponding to half the length (L) of the receiving conveyor (6).

3. Device according to claim 1 or 2, **characterised in that** the removal conveyor (2) is telescopic.

4. Device according to one of the preceding claims, **characterised in that** the receiving conveyor (6) is telescopic or its length can be adjusted passively.

5. Device according to one of the preceding claims, **characterised in that** the transfer conveyor (4) and the receiving conveyor (6) are arranged on a common machine frame which can be moved in a controlled manner on a driving unit (8).

6. Device according to one of the preceding claims, **characterised in that** the transfer conveyor (4) is wider at the take-up end (16) than at the transfer end, and is equipped with at least one lateral conveyor element (4c, d), in particular rectangular, triangular or trapezoid, which tapers towards the transfer end (18).

7. Device according to one of the preceding claims, **characterised in that** the receiving conveyor (6) has several receiving conveyor elements (6a, 6a') arranged parallel next to one another, which can be driven independently of one another, can be reversible, telescopic or passively length-adjustable.

8. Device according to one of the preceding claims, **characterised in that** the transfer conveyor (4) has several transfer conveyor elements (4a) arranged parallel next to one another, which can be driven independently and can be reversible.

9. Device according to one of the preceding claims, **characterised in that** arranged adjacent to the removal conveyor (2) and/or adjacent to the transfer conveyor (4) are side faces (34, 36), which can be inclined obliquely or can be vertical.

10. Device according to claim 9, **characterised in that** a work platform (40) for an operator (42) is arranged outside and adjacent to a side face (34, 36).

11. Method for unloading piece goods that are stacked, poured or loosely piled on the floor (22) of a storage bay, which uses a device according to one of the preceding claims, wherein in a first step the device is brought into an upper unloading position, and piece goods that are located above a given unloading height or above the transfer conveyor (4) are transferred to the transfer conveyor, and in a second step the device is brought into a lower unloading position and piece goods that are located below the given unloading height, or on the floor (22) of the storage bay, are moved onto the receiving conveyor (6).

12. Method according to claim 11, **characterised in that** in the first step, the device is brought consecutively or alternately into an first upper unloading position and into a second upper unloading position, with the take-up end (16) in the first upper unloading position being at a greater height above the floor (22) than in the second upper unloading position.

13. Method according to claim 11 or 12, **characterised in that** the moving of at least the piece goods located above the transfer conveyor (4) onto the transfer conveyor (4) is assisted manually by an operator (42), in particular by means of an auxiliary tool (50).

14. Method according to one of the claims 11 to 13, **characterised in that** before or during the first step, the device is moved as far as possible into the storage bay, until the receiving conveyor (6), in particular standing vertically, begins to rest against the piece goods.

15. Method according to one of the claims 11 to 14, **characterised in that** the first and second steps are repeated in alternation, until the storage bay is completely unloaded.

16. Method according to one of the claims 11 to 15, **characterised in that** piece goods lying on the floor (22) of the storage bay are taken up by the device, which is located in a lower unloading position, being driven against the direction of conveyance (12).

## Revendications

1. Dispositif de décharge de marchandises superposées, déversées ou entassées en vrac sur le sol (22) d'un espace d'entreposage, comportant un convoyeur de réception (6), qui présente une extrémité de réception (6b) faisant librement saillie et une extrémité de décharge arrière (6c), un convoyeur de décharge (2) et un convoyeur de transfert intercalé entre les deux (4), qui présente une extrémité de prise en charge avant (16) reliée à l'extrémité de décharge (6c) du convoyeur de réception (6) et une extrémité de déchargement arrière (18) reliée à une extrémité frontale (2a) du convoyeur de décharge (2), où le convoyeur de transfert (4) est maintenu de manière pivotante en hauteur autour d'un premier axe de pivotement horizontal (26) transversal à sa direction de transport (12) à l'extrémité de déchargement (18) voisine de l'extrémité frontale (2a) du convoyeur de décharge (2), et où le convoyeur de réception (6) est maintenu de manière pivotante en hauteur autour d'un second axe de pivotement horizontal (30) transversal à sa direction de transport (12) à l'extrémité de décharge (6c) voisine de l'extrémité de prise en charge (16) du convoyeur de transfert (4), **caractérisé en ce que** le convoyeur de réception (6) et le convoyeur de transfert (4) peuvent être amenés par pivotement autour du premier et du second axe de pivotement (26, 30) en au moins une position haute de déchargement, dans laquelle une surface de transport du convoyeur de transfert (4) se trouve sensiblement à l'horizontale selon un angle d'au plus 10°, 20°, 30° ou 40° par rapport à l'horizontale avant le premier axe de pivotement (26), une surface de transport du convoyeur de réception (6) se trouve sensiblement à la verticale selon un angle d'au plus 10°, 20°, 30° ou 40° par rapport à la verticale sous le second axe de pivotement (30) et l'extrémité de réception (6b) du convoyeur de réception (6) se trouve sur le sol ou immédiatement au-dessus du sol (22) de l'espace d'entreposage, ou en au moins une position basse de déchargement, dans laquelle les surfaces de transport du convoyeur de réception (6) et du convoyeur de transfert (4) se trouvent sensiblement à l'horizontale selon un angle d'au plus 10°, 20°, 30° ou 40° par rapport à l'horizontale et l'extrémité de réception (6b) du convoyeur de réception (6) se trouve sur le sol ou immédiatement au-dessus du sol (22) de l'espace d'entreposage.

2. Dispositif selon la revendication 1, **caractérisé en ce que** le convoyeur de décharge (2) est disposé à une hauteur prédéterminée (H) au-dessus du sol (22), qui correspond à une demi-longueur (L) du convoyeur de réception (6).

3. Dispositif selon la revendication 1 ou 2, **caractérisé en ce que** le convoyeur de décharge (2) est télescopique.

4. Dispositif selon une des revendications précédentes, **caractérisé en ce que** le convoyeur de réception (6) est télescopique ou de longueur passivement ajustable.

5. Dispositif selon une des revendications précédentes, **caractérisé en ce que** le convoyeur de transfert (4) et le convoyeur de réception (6) sont disposés sur un châssis de machine commun, qui peut être transporté et contrôlé sur une unité de transport (8).

6. Dispositif selon une des revendications précédentes, **caractérisé en ce que** le convoyeur de transfert (4) est plus large en son extrémité de prise en charge (16) qu'en son extrémité de transfert et est équipé d'au moins un élément convoyeur latéral (4c,d) de forme notamment carrée, triangulaire ou trapézoïdale s'affinant en direction de l'extrémité de déchargement (18).

7. Dispositif selon une des revendications précédentes, **caractérisé en ce que** le convoyeur de réception (6) présente plusieurs éléments convoyeurs récepteurs (6a, 6a') parallèles les uns par rapport aux autres, qui peuvent être indépendamment entraînés, rétractés, télescopés ou passivement ajustés en leur longueur.

8. Dispositif selon une des revendications précédentes, **caractérisé en ce que** le convoyeur de transfert (4) présente plusieurs éléments convoyeurs récepteurs (4a) parallèles les uns par rapport aux autres, qui peuvent être indépendamment entraînés et rétractés.

9. Dispositif selon une des revendications précédentes, **caractérisé en ce que** des panneaux latéraux (34, 36), qui peuvent être inclinés de façon transversale ou verticale, sont disposés à côté du convoyeur de décharge (2) et/ou à côté du convoyeur de transfert (4).

10. Dispositif selon la revendication 9, **caractérisé en ce qu'**une plateforme de travail (40) est disposée pour un opérateur (42) dans une zone extérieure et voisine d'un panneau latéral (34, 36).

11. Procédé de décharge de marchandises superposées, déversées ou entassées en vrac sur le sol (22) d'un espace d'entreposage en utilisant un dispositif selon l'une des revendications précédentes, où dans une première étape le dispositif est amené en une position haute de décharge et les marchandises, qui se trouvent au-dessus d'une hauteur prédéterminée de déchargement ou au-dessus du convoyeur de transfert (4), sont acheminées sur le convoyeur de transfert, et dans une seconde étape le dispositif est ramené en une position basse de décharge et les marchandises, qui se trouvent sous la hauteur prédéterminée de déchargement ou sur le sol (22) de l'espace d'entreposage, sont acheminées sur le convoyeur de réception (6).

12. Procédé selon la revendication 11, **caractérisé en ce que** dans la première étape le dispositif est placé consécutivement ou alternativement en une première position haute de décharge et en une seconde position haute de décharge, où l'extrémité de prise en charge (16) se trouve dans la première position haute de décharge à une hauteur au-dessus du sol (22) supérieure à sa hauteur dans la seconde position haute de décharge.

13. Procédé selon la revendication 11 ou 12, **caractérisé en ce que** l'acheminement d'au moins les marchandises au-dessus du convoyeur de transfert (4) sur ce convoyeur de transfert (4) est aidé manuellement par un opérateur (42) en particulier au moyen d'un outil auxiliaire (50).

14. Procédé selon une des revendications 11 à 13, **caractérisé en ce que** avant ou pendant la première étape le dispositif est engagé autant que possible à l'intérieur de l'espace d'entreposage jusqu'à ce que notamment le convoyeur de réception (6) mis à la verticale commence à buter contre les marchandises.

15. Procédé selon une des revendications 11 à 14, **caractérisé en ce que** les première et seconde étapes soient répétées en alternance jusqu'à ce que l'espace d'entreposage soit entièrement vidé.

16. Procédé selon une des revendications 11 à 15, **caractérisé en ce que** les marchandises stockées sur le sol (22) de l'espace d'entreposage soient récupérées par un dispositif en sa position basse de déchargement entraîné dans le sens contraire à la direction de transport (12).
